# EUROPÄISCHE PATENTANMELDUNG

(11) **EP 1 865 328 A2**
(43) Veröffentlichungstag der Anmeldung: **12.12.2007**
(21) Anmeldenummer: 07107394.4
(22) Anmeldetag: 03.05.2007
(51) Int. Cl.: G01P 3/481, G01P 3/489

(54) **Verfahren zur Erfassung der Fahrgeschwindigkeit eines Kraftfahrzeuges und Einrichtung zur Durchführung des Verfahrens**

(30) Priorität: 09.06.2006 DE 102006026921
(71) Anmelder: SIEMENS AKTIENGESELLSCHAFT, 80333 München (DE)
(72) Erfinder: Hemmat Esfandabadi, Riaz, 78126, Königsfeld - Neuhausen (DE); Rombach, Gerhard, 78098, Triberg (DE); Selinger, Stephan, 4020, Linz (AT)

(57) **Zusammenfassung**

Bei der Erfassung einer Fahrgeschwindigkeit eines Kraftfahrzeuges wird eine fahrgeschwindigkeitsabhängige Impulsfolge erfasst und die Anzahl der Impulse innerhalb eines vorgegebenen Intervalls gezählt. Aus der Anzahl der Impulse innerhalb des Intervalls wird die Geschwindigkeit berechnet. Ein Speicher (9), in dem die Anzahl der Impulse abgespeichert wird, wird am Ende des Intervalls gelöscht. Das Verfahren zur Berechnung der Fahrgeschwindigkeit weist einen besonders geringen Rechenaufwand auf.

## Beschreibung

Die Erfindung betrifft ein Verfahren zur Erfassung der Fahrgeschwindigkeit eines Kraftfahrzeuges, bei dem in Abhängigkeit von der Fahrgeschwindigkeit des Kraftfahrzeuges eine Impulsfolge erzeugt und aus der Impulsfolge die Fahrgeschwindigkeit berechnet wird. Weiterhin betrifft die Erfindung eine Einrichtung zur Durchführung des Verfahrens mit einem Impulsgeber, welcher in Abhängigkeit der Fahrgeschwindigkeit des Kraftfahrzeuges eine Impulsfolge erzeugt und mit einer Auswerteeinrichtung zur Berechnung der Fahrgeschwindigkeit aus der Impulsfolge.

Bekannte Verfahren zur Erfassung einer Fahrgeschwindigkeit haben einen Impulsgeber, welcher beispielsweise bei einer Radumdrehung einen Impuls liefert. Die Anzahl der Impulse innerhalb einer vorgesehenen Zeitspanne entspricht der Fahrgeschwindigkeit. Dieses Verfahren weist jedoch den Nachteil einer sehr schlechten Auflösung bei niedrigen Geschwindigkeiten und einen hohen Berechnungsaufwand auf. Insbesondere muss beim Ausbleiben von Impulsen, wie beispielsweise bei negativer Beschleunigung, die Geschwindigkeit nach unten korrigiert werden. Ansonsten würde durch plötzliches Ausbleiben der Impulse die Fahrgeschwindigkeit bis zu einem Timeout konstant bleiben, obwohl sie bereits Null beträgt. Daher wird bei dem bekannten Verfahren ein weiteres Geschwindigkeitsmessverfahren zur Berechnung der Fahrgeschwindigkeit erzeugt, was zu einer weiten Erhöhung des Berechnungsaufwandes führt.

Der Erfindung liegt das Problem zugrunde, ein Verfahren der eingangs genannten Art so weiterzubilden, dass es den Aufwand für die Berechnung der Fahrgeschwindigkeit besonders gering hält. Weiterhin soll eine Einrichtung zur Durchführung des Verfahrens geschaffen werden, bei welcher die Auswerteeinrichtung besonders einfach aufgebaut ist.

Das erstgenannte Problem wird erfindungsgemäß dadurch gelöst, dass die Anzahl der Impulse innerhalb eines vorgesehenen festen Intervalls gezählt wird und dass aus der Anzahl der Impulse innerhalb des Intervalls die Fahrgeschwindigkeit berechnet wird.

Durch diese Gestaltung wird die Fahrgeschwindigkeit nach jedem vorgesehenen festen Intervall neu aus der Anzahl der erfassten Impulse berechnet. Als Intervall wird vorzugsweise eine Zeitspanne von 20 ms bis 50 ms herangezogen. Das erfindungsgemäße Verfahren ermöglicht die Berechnung der Geschwindigkeit nach der Formel v = Konstante * Anzahl der Impulse pro Intervall / Intervalldauer. Die Konstante ist fahrzeugspezifisch und wird beispielsweise in Abhängigkeit des Fahrzeugtyps und der konstruktiven Gestaltung eines Impulsgebers festgelegt. Dank der Erfindung wird die Fahrgeschwindigkeit zum großen Teil durch Hardware erfasst. Der Softwareaufwand für die Berechnung der Fahrgeschwindigkeit gestaltet sich besonders gering. Aufgrund der Eckzeiterfassung durch die Hardware und des asynchronen Software-Zugriffes ist die Flexibilität in der Software-Realisierung gewährleistet.

Schnelle Änderungen der Fahrgeschwindigkeit lassen sich mit dem erfindungsgemäßen Verfahren einfach erfassen, wenn ein Speicher, in dem die Anzahl der Impulse abgelegt wird, nach jedem Intervall gelöscht wird.

Ungenauigkeiten der Berechnung einer geringen Fahrgeschwindigkeit lassen sich gemäß einer anderen vorteilhaften Weiterbildung der Erfindung einfach vermeiden, wenn bei einer geringen Fahrgeschwindigkeit die Zeitdauer zwischen zwei Impulsen erfasst wird und wenn aus der Zeitdauer zwischen dem letzten Impuls und dem Ende eines folgenden Intervalls die Fahrgeschwindigkeit berechnet wird. Durch diese Gestaltung wird bei Berechnung einer geringen Fahrgeschwindigkeit ein größeres Intervall herangezogen als bei der Berechnung einer mittleren oder hohen Fahrgeschwindigkeit. Dies verursacht einen weicheren Übergang auf eine niedrigere Geschwindigkeit mit einem 1/x-Verlauf.

Ein Stillstand des Kraftfahrzeuges lässt sich gemäß einer anderen vorteilhaften Weiterbildung der Erfindung einfach erfassen, wenn bei Überschreitung einer vorgesehenen Zeitdauer zwischen dem letzten Impuls und dem Ende eines folgenden Intervalls die Fahrgeschwindigkeit auf Null gesetzt wird.

Zur weiteren Verringerung des Berechnungsaufwandes trägt es gemäß einer anderen vorteilhaften Weiterbildung der Erfindung bei, wenn bei Unterschreitung einer vorgesehenen Zeitdauer zwischen dem letzten Impuls und dem Ende eines folgenden Intervalls ein die Zeitdauer erfassender Speicher gelöscht wird.

Das zweitgenannte Problem, nämlich die Schaffung einer Einrichtung zur Durchführung des Verfahrens, bei welcher die Auswerteeinrichtung besonders einfach aufgebaut ist, wird erfindungsgemäß dadurch gelöst, dass ein erster Speicher zum Speichern der Zeitdauer zwischen den Impulsen und ein zweiter Speicher zum Speichern der Anzahl der von dem Impulsgeber erzeugten Impulse innerhalb eines vorgesehenen Intervalls mit der Auswerteeinrichtung verbunden ist und dass die Auswerteeinrichtung zur Berechnung der Fahrgeschwindigkeit aus den Impulsen für jedes Intervall ausgebildet ist.

Durch diese Gestaltung lässt sich die Auswerteeinrichtung aus besonders einfachen Bauteilen zusammensetzen, so dass die Fahrgeschwindigkeit zum großen Teil durch Hardware erfasst wird. Der in der Auswerteeinrichtung bereitzustellende Softwareaufwand für die Berechnung der Fahrgeschwindigkeit lässt sich dank der Erfindung besonders gering halten. Vorzugsweise werden insgesamt drei Speicher eingesetzt.

Zur weiteren Vereinfachung des Aufwandes der Auswerteeinrichtung trägt gemäß einer vorteilhaften Weiterbildung der Erfindung eine Löscheinrichtung zum Löschen des zweiten Speichers am Ende eines Intervalls bei.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Einrichtung zur Durchführung eines erfindungsgemäßen Verfahrens zur Erfassung einer Fahrgeschwindigkeit eines Kraftfahrzeuges,
- Fig. 2: ein Flussdiagramm mit einer Impulsfolge und aus der Impulsfolge abgeleiteten Werten zur Erfassung der Fahrgeschwindigkeit durch das erfindungsgemäße Verfahren.

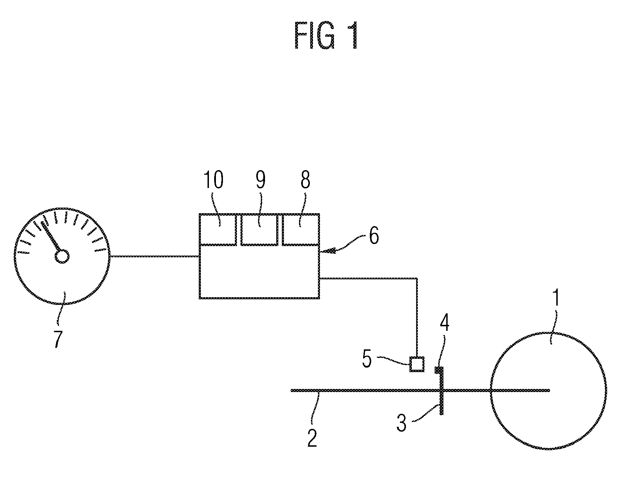

Figur 1 zeigt eine Einrichtung zur Erfassung einer Fahrgeschwindigkeit eines Kraftfahrzeuges, bei der eine mit einem Rad 1 des Kraftfahrzeuges verbundene Antriebswelle 2 eine Scheibe 3 mit einer oder mehreren Markierungen 4 trägt. Die Markierungen 4 und damit die Umdrehungen oder Teilumdrehungen der Scheibe 3 werden mittels eines Impulsgebers 5 erfasst, welcher mit einer Auswerteeinrichtung 6 verbunden ist. Die Auswerteeinrichtung 6 errechnet aus der Impulsfolge des Impulsgebers 5 die Fahrgeschwindigkeit des Kraftfahrzeuges und zeigt diese auf einer Anzeigeeinheit 7 an. Die Auswerteeinrichtung 6 hat einen ersten Speicher 8 zur Abspeicherung der Zeitdauer zwischen zwei Impulsen und einen zweiten Speicher 9 zur Abspeicherung der Anzahl der Impulse innerhalb eines von einem Zeitgeber 10 erzeugten Intervalls.

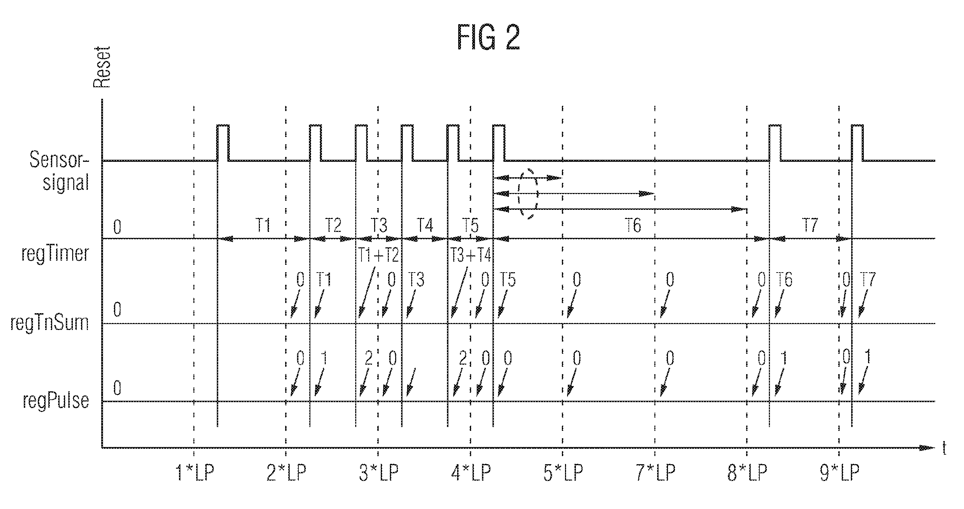

Figur 2 zeigt ein Diagramm, in dem in einer mit Sensor Signal gekennzeichneten Zeile eine Impulsfolge des Impulsgebers 5 bei einer veränderlichen Fahrgeschwindigkeit über die Zeit t aufgetragen ist. Die verstrichene Zeit wird in mit LP gekennzeichnete Intervalle unterteilt. Zunächst werden in der mit regTimer gekennzeichneten Zeile die aktuellen Zeiten T1 bis T7 zwischen den Impulsen erfasst und in dem in Figur 1 dargestellten ersten Speicher 8 abgelegt. Anschließend werden die einzelnen Zeiten an dem regTimer in der Zeile regTnSum erfasst und im Speicher 8 aufsummiert. In der mit regPulse gekennzeichneten Zeile wird die Anzahl der Impulse innerhalb eines Intervalls LP ermittelt und in dem in Figur 1 dargestellten zweiten Speicher 9 abgelegt. Da die Fahrgeschwindigkeit des Fahrzeuges proportional zu der Anzahl der Impulse pro Zeit ist, lässt sich die Geschwindigkeit nach der Formel v = Konstante * Anzahl der Impulse pro Intervall / Intervalldauer ermitteln. Bei geringen Fahrgeschwindigkeiten wird hingegen die verstrichene Zeitdauer zwischen einem letzten Impuls und einem Ende eines späteren Intervalls erfasst. Diese Zeitdauer kann als Maß für die Fahrgeschwindigkeit herangezogen werden.

## Patentansprüche

1. Verfahren zur Erfassung der Fahrgeschwindigkeit eines Kraftfahrzeuges, bei dem in Abhängigkeit von der Fahrgeschwindigkeit des Kraftfahrzeuges eine Impulsfolge erzeugt und aus der Impulsfolge die Fahrgeschwindigkeit berechnet wird, **dadurch gekennzeichnet, dass** die Anzahl der Impulse innerhalb eines vorgesehenen festen Intervalls gezählt wird und dass aus der Anzahl der Impulse innerhalb des Intervalls die Fahrgeschwindigkeit berechnet wird.

2. Verfahren nach Anspruch 1, **dadurch gekennzeichnet, dass** ein Speicher, in dem die Anzahl der Impulse abgelegt wird, nach jedem Intervall gelöscht wird.

3. Verfahren nach Anspruch 1 oder 2, **dadurch gekennzeichnet, dass** bei einer geringen Fahrgeschwindigkeit die Zeitdauer zwischen dem letzten Impuls und dem Ende eines folgenden Intervalls erfasst wird und dass aus dieser Zeitdauer die Fahrgeschwindigkeit berechnet wird.

4. Verfahren nach Anspruch 3, **dadurch gekennzeichnet, dass** bei Überschreitung der vorgesehenen Zeitdauer zwischen dem letzten Impuls und dem Ende eines folgenden Intervalls die Fahrgeschwindigkeit auf Null gesetzt wird.

5. Verfahren nach Anspruch 3 oder 4, **dadurch gekennzeichnet, dass** bei Unterschreitung einer vorgesehenen Zeitdauer zwischen dem letzten Impuls und dem Ende eines folgenden Intervalls ein die Zeitdauer erfassender Speicher gelöscht wird.

6. Einrichtung zur Durchführung des Verfahrens mit einem Impulsgeber, welcher in Abhängigkeit der Fahrgeschwindigkeit des Kraftfahrzeuges eine Impulsfolge erzeugt und mit einer Auswerteeinrichtung zur Berechnung der Fahrgeschwindigkeit aus der Impulsfolge, **dadurch gekennzeichnet, dass** ein erster Speicher (8) zum Speichern der Zeitdauer zwischen den Impulsen und ein zweiter Speicher (9) zum Speichern der Anzahl der von dem Impulsgeber (5) erzeugten Impulse innerhalb eines vorgesehenen Intervalls mit der Auswerteeinrichtung (6) verbunden ist und dass die Auswerteeinrichtung (6) zur Berechnung der Fahrgeschwindigkeit aus den Impulsen für jedes Intervall ausgebildet ist.

7. Einrichtung nach Anspruch 6, **gekennzeichnet durch** eine Löscheinrichtung zum Löschen des zweiten Speichers (9) am Ende eines Intervalls.
